# EUROPEAN PATENT APPLICATION

(11) **EP 2 822 252 A1**
(43) Date of publication of application: **07.01.2015**
(21) Application number: 14172005.2
(22) Date of filing: 11.06.2014
(51) Int. Cl.: H04L 29/08, H04L 12/28, H04N 21/24

(54) **RUI server, RUI terminal apparatus, RUI system, and method for providing RUI service status**

(30) Priority: 05.07.2013 KR 20130078781
(71) Applicant: Samsung Electronics Co., Ltd, Gyeonggi-do 443-742 (KR)
(72) Inventor: Park, Se-dong, Seoul (KR); Lee, Dai-boong, Gyeonggi-do (KR); Lee, Sung-gyo, Gyeonggi-do (KR); Cho, Sung-hee, Gyeonggi-do (KR)
(74) Representative: Brandon, Paul Laurence

(57) **Abstract**

A method for providing an RUI service is provided. The method includes: providing an RUI service to a plurality of RUI terminal apparatuses; detecting resource are scarce in response to an RUI service request received from a new RUI terminal apparatus; and displaying a resource scarcity message and transmitting the resource scarcity message to at least one RUI terminal apparatus from among the plurality of RUI terminal apparatuses and the new RUI terminal apparatus in response to the detecting resources are scarce.

## Description

### CROSS-REFERENCE TO RELATED APPLICATION

This application claims priority from Korean Patent Application No. 10-2013-0078781, filed on July 5, 2013 in the Korean Intellectual Property Office, the disclosure of which is incorporated herein by reference in its entirety.

### BACKGROUND

### 1. Field

Apparatuses and methods consistent with exemplary embodiments relate to providing a remote user interface (RUI) service, and more particularly, to an RUI system which can provide various kinds of RUI services to an RUI terminal apparatus through an RUI server connected to a home network, an RUI server, an RUI terminal apparatus, and a method for providing an RUI service.

### 2. Description of the Related Art

Remote user interface (RUI) technology has been developed for data transmission and control between devices in a home network. The RUI technology may be based on a client-server structure, and may provide a technical means for controlling an RUI server to provide data such as content in response to a request of an RUI client or controlling the RUI client. The RUI server and the RUI client are connected to each other through a wire or wireless communicating means.

The RUI does not only refer to elements forming a user interface such as an icon, a menu, a scroll bar, a window, and a text. That is, in addition to these elements, the RUI may also include various kinds of data exchanged between the RUI server and the RUI client, such as A/V data, image data, web address information, synchronization information, control signals, a list of channels, and electronic program guide (EPG).

CEA-2014 (Web-based Consumer Electronics Association's -2014), which is the representative technology standard on the RUI system, suggests a method for providing RUI services using a text-based hyper text markup language (HTML). Besides this, various RUI technologies such as an image-based remote desktop protocol (RDP), expandable home theater (XHT), widget description exchange service (WiDeX), etc. have been studied.

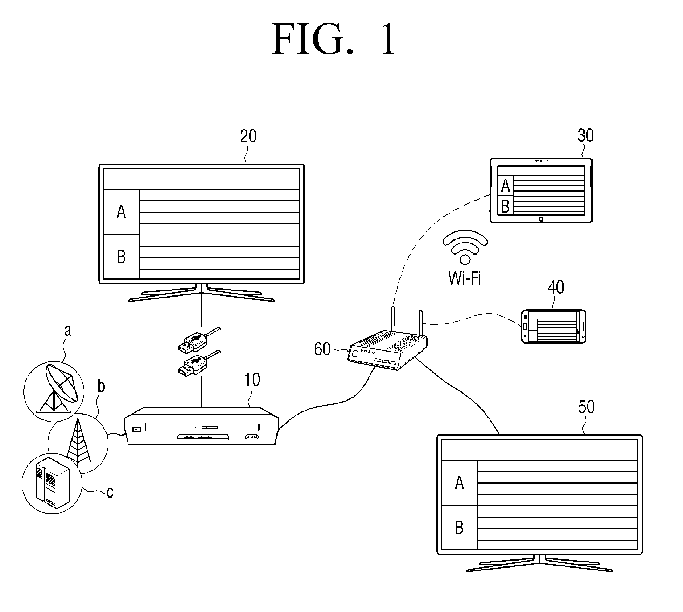

FIG. 1 is a view illustrating a general configuration of an RUI system. As shown in FIG. 1, an RUI server 10 receives content from a satellite broadcast (a), a terrestrial broadcast (c), and an IPTV service provider (c), and provides the content to RUI clients located at home. For example, the RUI server 10 may provide the content to a TV 20 through a cable, and may provide the content to a TV 50 which is located in another place at home through a repeater 60. Also, the RUI server 10 may provide the content to a tablet PC 30 or a smartphone 40 wirelessly, and may manage or control these RUI clients.

Because one RUI server 10 may provide RUI services to the plurality of RUI clients 20, 30, 40, and 50, simultaneously, as explained above, there may be a method for the RUI server 10 to manage resources effectively. In particular, the RUI server 10 may distribute resources effectively when the RUI clients compete with one another for the resources. Also, the RUI server 10 may provide use of resources or priority information to a user of each RUI client in a waiting situation.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments provide an RUI server which can distribute resources effectively when RUI clients compete with one another for the resources, and inform a user of each RUI client of a waiting situation for use of the resources or priority, an RUI terminal apparatus, an RUI system, and a method for providing an RUI service.

According to an aspect of an exemplary embodiment, there is provided a method for providing a remote user interface (RUI) service, the method including providing a RUI service to a plurality of RUI terminal apparatuses, detecting resources are scarce in response to an RUI service request received from a new RUI terminal apparatus, and displaying a resource scarcity message and transmitting the resource scarcity message to at least one RUI terminal apparatus from among the plurality of RUI terminal apparatuses and the new RUI terminal apparatus in response to the detecting the resource are scarce.

The resource scarcity message may include at least one of resource allocation information for the plurality of RUI terminal apparatuses and resource allocation information for the new RUI terminal apparatus.

The method as may further include adjusting the RUI service being provided to the plurality of RUI terminal apparatuses and the new RUI terminal apparatus in response to at least one of a user command to reallocate the resources and a predetermined priority.

The user command to reallocate the resources may be received from an inputter of an RUI server, or at least one RUI terminal apparatus that has authority from among the plurality of RUI terminal apparatuses and the new RUI terminal apparatus.

The adjusting the RUI service may include adjusting a resolution of content that is transmitted in response to a service bandwidth being scarce due to a content request by the new RUI terminal apparatus, and transmitting the content to at least one of the plurality of RUI terminal apparatuses and the new RUI terminal apparatus.

The adjusting the RUI service may include, adjusting a tuning channel of the broadcast receiving apparatus according to the user command to reallocate the resources or the predetermined priority in response to all tuners of a broadcast receiving apparatus being in use and the new RUI terminal apparatus requesting broadcast streaming of a new channel which is not tuned.

The method may further include stopping the providing the RUI service to at least one of the plurality of RUI terminal apparatus and the new RUI terminal apparatus according to a result of the adjusting the RUI service, and transmitting an RUI service end message to the at least one RUI terminal apparatus for which the provision of the RUI service is stopped.

According to an aspect of another exemplary embodiment, there is provided a method for providing a remote user interface (RUI) service, the method may include requesting the RUI service from an RUI server, receiving a resource scarcity message from the RUI server in response to resources of the RUI server being scarce due to the requesting of the RUI service, and displaying the resource scarcity message.

The resource scarcity message may include at least one of resource allocation information for a plurality of RUI terminal apparatuses, and resource allocation information for a new RUI terminal apparatus.

According to an aspect of another exemplary embodiment, there is provided a method for providing a remote user interface (RUI) service, the method including providing, by an RUI server, the RUI service to a plurality of RUI terminal apparatuses, requesting, by a new RUI terminal apparatus, the RUI server provide the RUI service, transmitting, by the RUI server, a resource scarcity message to at least one of the plurality of RUI terminal apparatuses and the new RUI terminal apparatus in response to resources of the RUI server being scarce due to the RUI service request, and displaying, by the at least one of the plurality of RUI terminal apparatuses and the new RUI terminal apparatus that has received the resource scarcity message, the received resource scarcity message.

According to an aspect of another exemplary embodiment, there is provided a remote user interface (RUI) server including a display, communicator configured to communicate with a plurality of RUI terminal apparatuses to provide an RUI service, and a controller configured to control the display to display a resource scarcity message, and control the communicator to transmit the resource scarcity message to at least one RUI terminal apparatus from among the plurality of RUI terminal apparatuses and a new RUI terminal apparatus in response to resources being scarce due to an RUI service request from the new RUI terminal apparatus.

The resource scarcity message may include at least one of resource allocation information for the plurality of RUI terminal apparatuses and resource allocation information for the new RUI terminal apparatus.

The controller may be configured to adjust the RUI service being provided by the communicator to the plurality of RUI terminal apparatuses and the new RUI terminal apparatus in response to at least one of a user command to reallocate the resources and a predetermined priority.

The user command to reallocate the resources may be received from an inputter of the RUI server, or at least one RUI terminal apparatus that has authority from among the plurality of RUI terminal apparatuses and the new RUI terminal apparatus.

The controller may be configured to adjust a resolution of content that is transmitted in response to a service bandwidth being scarce due to a content streaming request by the new RUI terminal apparatus, and control the communicator to transmit the content to at least one of the plurality of RUI terminal apparatuses and the new RUI terminal apparatus.

The controller may be configured to adjust a tuning channel of the broadcast receiving apparatus according to the user command to reallocate the resources or the predetermined priority in response to all tuners of a broadcast receiving apparatus being in use and the new RUI terminal apparatus requesting broadcast streaming of a new channel which is not tuned.

The controller may be configured to stop providing the RUI service by the communicator to at least one of the plurality of RUI terminal apparatus and the new RUI terminal apparatus according to a result of the adjusting the RUI service, and control the communicator to transmit an RUI service end message to the at least one RUI terminal apparatus for which the provision of the RUI service is stopped.

According to an aspect of another exemplary embodiment, there is provided a remote user interface (RUI) terminal apparatus including a display, a communicator configured to communicate with an RUI server to request receiving an RUI service, and a controller configured to receive a resource scarcity message from the RUI server, and control the display to display the received resource scarcity message in response to resources of the RUI server being scarce due to the RUI service request.

The resource scarcity message may include at least one of resource allocation information for a plurality of RUI terminal apparatuses, and resource allocation information for a new RUI terminal apparatus.

According to an aspect of another exemplary embodiment, there is provided a remote user interface (RUI) system including an RUI server, and an RUI terminal apparatus configured to request the RUI server provide an RUI service, wherein the RUI server is configured to transmit a resource scarcity message to at least one of a plurality of RUI terminal apparatuses that have received the RUI service and the RUI terminal apparatus in response to resources being scarce due to the RUI service request.

### BRIEF DESCRIPTION OF THE FIGURES

The above and/or other aspects will be more apparent by describing in detail exemplary embodiments, with reference to the accompanying drawings, in which:
FIG. 1 is a view illustrating a general configuration of RUI system;
FIG. 2 is a block diagram illustrating a configuration of an RUI server according to an exemplary embodiment;
FIG. 3 is a view illustrating a resource scarcity message according to an exemplary embodiment;
FIG. 4 is a block diagram illustrating a configuration of an RUI server according to another exemplary embodiment;
FIG. 5 is a block diagram illustrating a configuration of an RUI terminal apparatus according to an exemplary embodiment; and
FIGS. 6 to 9 are flowcharts illustrating a method for providing an RUI service according to various exemplary embodiments.

### DETAILED DESCRIPTION OF EXEMPLARY EMBODIMENTS

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of exemplary embodiments. Thus, it is apparent that exemplary embodiments can be carried out without those specifically defined matters. Also, functions or elements known in the related art are not described in detail because they would obscure the exemplary embodiments with unnecessary detail.

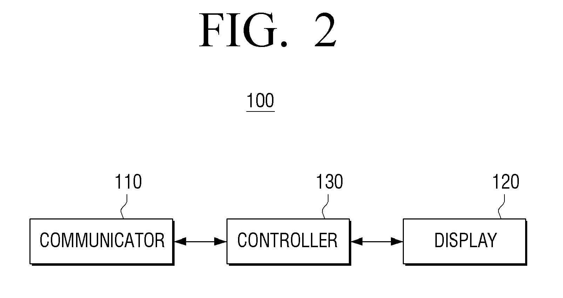

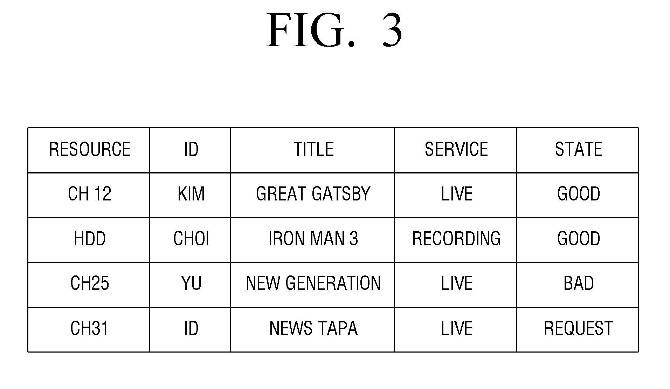

FIG. 2 is a block diagram illustrating a configuration of an RUI server according to an exemplary embodiment, and FIG. 3 is a view illustrating a resource scarcity message according to an exemplary embodiment.

Referring to FIG. 2, an RUI server 100 according to an exemplary embodiment includes a communicator 110, a display 120, and a controller 130.

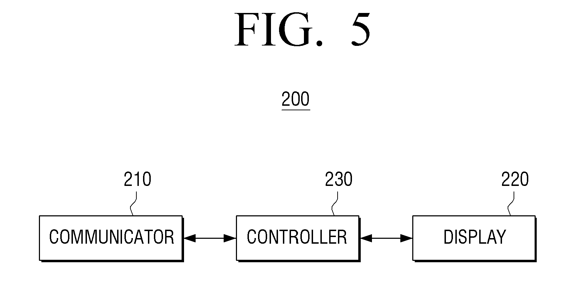

The communicator 110 may be configured to communicate with at least one RUI terminal apparatus 200, as shown in Figure 5, to provide an RUI service. Specifically, the communicator 110 receives an RUI service request from the RUI terminal apparatus 200, and transmits an RUI service to the RUI terminal apparatus 200.

The RUI recited herein refers to elements that may form a user interface such as an icon, a menu, a scroll bar, a window, a text, etc. However, this should not be considered as limiting and the RUI includes all kinds of data exchanged between the RUI server 100 and the RUI terminal apparatus 200, such as A/V data, image data, web address information, synchronization information, control signals, a list of channels, EPG, information for controlling devices, etc. The RUI server 100 provides services to the RUI terminal apparatus 200 using these RUIs.

The communicator 110 may communicate according to various wire/wireless communication standards along with a protocol conforming to CEA-2014, which is the RUI technology standard.

For example, the communicator 110 may communicate according to the Wi-Fi communication standard conforming to the IEEE 802.11 technology standard, the 3^{rd} generation cellular communication standard such as wideband CDMA (WCDMA), high speed downlink packet access (HSDPA), high speed uplink packet access (HSUPA), and high speed packet access (HSPA), and mobile WiMAX, WiBro, and long term evolution (LTE) standards, which are the 4^{th} generation mobile communication technologies. Besides these, the communicator 110 may communicate according to other short-range communication standards such as Bluetooth, infrared data association (IrDA), near field communication (NFC), and Zigbee standards, and the wireless LAN standard. Also, the communicator 110 may communicate according to a wire interface standard such as high definition multimedia interface (HDMI), digital video/visual interface (DVI), mobile high-definition link (MHL), and digital interactive interface for video and audio (DIIVA).

The display 120 may be configured to display a variety of information. The display 120 renders a variety of information which may be processed by the RUI server 100. In particular, when the resources are scarce due to a content request of a new RUI terminal apparatus 200, the RUI server 100 may display a resource scarcity message under the control of the controller 130, which will be described later.

When the RUI server 100 includes a relatively small displaying means such as a set-top box, the display 120 may display a relatively simple resource scarcity message using characters, numbers, or graphs. On the other hand, when the RUI server 100 includes a high performance display function like a digital TV, the display 120 may display the resource scarcity message in various forms and may provide a more user-friendly interface. A method for displaying the resource scarcity message of the display 120 will be explained in detail below.

The display 120 may be implemented in various ways. For example, the display 120 may be implemented by using various display technologies such as an organic light emitting diode (OLED), a liquid crystal display panel (LCD panel), a plasma display panel (PDP), a vacuum fluorescent display (VFD), a field emission display (FED), and an electro luminescence display (ELD).

The controller 130 may control an overall operation of the RUI server 100. In particular, when the resources are scarce due to the content request of the new RUI terminal apparatus 200, the controller 130 controls the display 120 to display the resource scarcity message.

Also, the controller 130 may control the communicator 120 to transmit the resource scarcity message to at least one RUI terminal apparatus from among the plurality of RUI terminal apparatuses and the new RUI terminal apparatus. The resource scarcity recited herein refers to a case in which the number of RUI terminal apparatuses, to which the RUI server 100 can provide the RUI services simultaneously with performance higher than predetermined performance, is smaller than the number of RUI terminal apparatuses 200 that request the RUI services. The resource scarcity message may be a message indicating information on the case in which the resource is scarce. The resource scarcity message may include at least one of resource allocation information on the plurality of RUI terminal apparatuses, and resource information necessary for the new RUI terminal apparatus.

For example, the RUI server 100 may include two tuners that are tuned to channels A and B, respectively. The RUI server 100 may then provide the content received through the tuned channels to the plurality of RUI terminal apparatuses. Then, a new RUI terminal apparatus 20 may request that the RUI server 100 provide a broadcast from channel C, which is not currently tuned, however, the RUI server 100 may lack resources to do so. At this time, the RUI server 100 displays on the display 120 a message showing that there is no tuner receiving the broadcast from channel C, and transmits this message to the new RUI terminal apparatus 200. Also, the RUI server 100 may provide information to the plurality of RUI terminal apparatuses which have received the RUI services and channels, and broadcast information of the channel to the new RUI terminal apparatus 100.

According to another exemplary embodiment, it may be that a wireless home network in which the RUI server 100 and the plurality of RUI terminal apparatuses are connected to each other has a predetermined bandwidth (for example, 1Gbps). Also, it may be that the RUI server 100 provides a service of streaming content stored therein to a tablet PC at a speed of 500Mbps through a Wi-Fi network. Also, it may be that the RUI server 100 streams a broadcast content received through a channel tuned by the tuner to a smartphone connected to the RUI server 100 at 300Mbps through the Wi-Fi network. At this time, when an event in which a smart glasses apparatus, which is a new apparatus, requests IPTV content, which requires a streaming service of 400Mbps, from the RUI server 100, the RUI server 100 lacks resources because the whole bandwidth of the wireless home network is 1Gbps and it is impossible to provide services to all of the RUI terminal apparatuses. At this time, the RUI server 100 displays, on the display 120, a message indicating that it is not possible to provide the service using the current bandwidth, and also transmits the message to the new RUI terminal apparatus 200. Further, the RUI server 100 may provide information to the terminal apparatus which has already received the RUI service. Particularly the information provided may be a kind of service provided to each of the RUI terminal apparatuses 200, a streaming speed, and/or information of a provided content to the new RUI terminal apparatus 200.

FIG. 3 illustrates a resource scarcity message according to an exemplary embodiment. The resource scarcity message indicates a kind of resource (RESOURCE), an identifier (ID) of an RUI terminal apparatus, content information (TITLE), a kind of service (SERVICE), and a service providing state (STATE). It can be seen that an RUI terminal apparatus having the identifier of 'KIM' receives a live broadcast streaming service through channel 12, the title of the content is 'The Great Gatsby', and the transmitting condition is good. It can also be seen that an RUI terminal apparatus having the identifier of 'CHOI' receives a recorded service of a content stored in a hard disk of the RUI server 100, the title of the content is 'IRON MAN 3', and the transmitting condition is good.

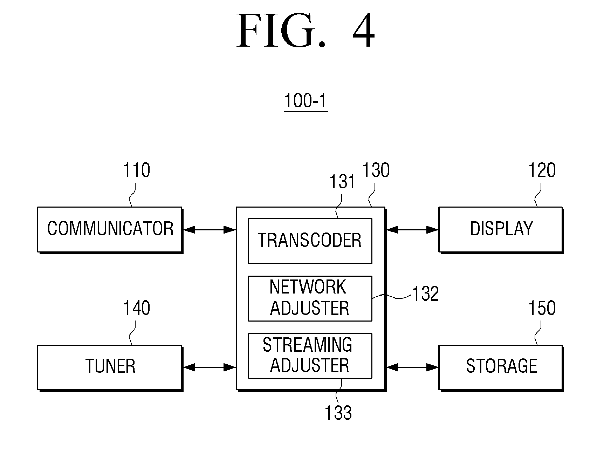

FIG. 4 is a block diagram illustrating a configuration of an RUI server according to another exemplary embodiment.

Referring to FIG. 4, an RUI server 100-1 may includes a communicator 110, a display 120, a controller 130, a tuner 140, and a storage 150. The elements may perform some of the functions as described in the exemplary embodiment of the RUI server 100 in addition to some new functions explained below.

The tuner 140 may select an RF broadcast signal corresponding to a selected channel from among RF broadcast signals received through an antenna, and may then convert the selected RF broadcast signal into an intermediate frequency signal, or a baseband image or sound signal. For example, when the selected RF broadcast signal is a digital broadcast signal, the tuner 140 converts the RF broadcast signal into a digital IF signal (DIF), and, when the RF broadcast signal is an analogue broadcast signal, the tuner 140 converts the RF broadcast signal into an analogue baseband image or sound signal (CVBS SIF).

The tuner 140 may receive an RF broadcast signal of a single carrier according to an advanced television system committee (ATSC) scheme, or may receive an RF broadcast signal of a plurality of carriers according to a digital video broadcasting (DVB) scheme.

According to another exemplary embodiment, the RUI server 100-1 may further include a demodulator. The demodulator may demodulate the digital IF signal (DIF) which is converted by the tuner 140. After demodulating, the demodulator may output a stream signal (transport stream (TS)). The stream signal may be a signal in which an image signal, a sound signal, or a data signal is multiplexed. For example, the stream signal may be an MPEG-2 TS, in which an image signal of an MPEG-2 standard or a sound signal of a Dolby AC-3 standard is multiplexed. The output stream signal is signal-processed by the display 110 and displayed. When the RUI server 100-1 is implemented by using a set-top box, the output stream signal is output to an external display apparatus and the external display apparatus outputs an image.

Also, the RUI server 100-1 may include at least two tuners and a demodulator. In this case, it may be possible to provide an RUI service for a plurality of broadcast streams. In addition a voice may be output in a similar manner.

The storage 150 may be configured to store all kinds of data. For example, the storage 150 may store broadcast content which is received from at least one of a satellite broadcast, a terrestrial broadcast, and an IPTV. Also, the storage 150 may store content which is received from another terminal apparatus through a wire/wireless interface, or may store an operating system for running the RUI server 100-1 and applications. When the RUI server 100-1 is connected to an external network, the storage 150 may store firmware, and when the firmware of the RUI server 100-1 is upgraded, the storage 150 stores the upgraded firmware.

There is no limit to implementation of the storage 150. That is, the storage 150 may be implemented by using at least one of a flash memory, a hard disk, a multimedia card micro, a memory of a card type (SD or XD memory, etc.), a random access memory (RAM), and a read only memory (ROM)(EEPROM). Also, an external storage medium such as an optical disk may be used. The RUI server 100-1 may include a plurality of storage media described above according to a use and purpose of stored data.

As shown in FIG. 4, the controller 130 includes a transcoder 131, a network adjuster 132 which may also be called a network monitor, and a streaming adjuster 133. When the resources are scarce as described above, the controller 130 may adjust allocation of resources using the above-described elements as follows.

First, the controller 130 may adjust providing the RUI service to the plurality of RUI terminal apparatuses and the new RUI terminal apparatus 200 according to predetermined priority.

The above-described exemplary embodiment in which there is a shortage of tuners is considered again. That is, the RUI server 100-1 lacks resources when the RUI server 100-1 uses all tuners for the RUI service, and the new RUI terminal apparatus 200 requests the RUI server 100-1 provide a broadcast from a channel which is not currently tuned,. At this time, the RUI server 100-1 may display the resource scarcity message or may transmit the message to the RUI terminal apparatuses 200 as described above. Also, the RUI server 100-1 may adjust allocation of resources.

The resources may be allocated according to predetermined priority. For example, when the new RUI terminal apparatus 200 has low priority in the above-described exemplary embodiment, the new RUI terminal apparatus 200 just receives and displays the resource scarcity message, and cannot be provided with the requested channel content. However, when the priority of the new RUI terminal apparatus 200 is higher than that of another RUI terminal apparatuses which has already received the RUI service, the stream adjuster 133 controls to provide the requested channel content to the new RUI terminal apparatus 200 and stop providing the service to another RUI terminal apparatus which has received the service. At this time, the RUI server 100-1 transmits a service end message to another RUI terminal apparatus, and another RUI terminal apparatus displays the message and informs it to the user.

The priority may be set by the user in advance or may be set at the time when a product is released. In the latter case, the priority may be determined according to a policy. For example, the smartphone may have lower priority than those of a tablet PC and a TV. Further, the priority may be set by the content type. For example, priority of news or a topical content may be lower than that of a content related to amusement. The priority may be set according to other content or service information such as bandwidth usage. For example, priority of a service that transmits a large amount of data may be lower than that of a service which does not.

Secondly, the controller 130 may adjust providing the RUI service to the plurality of RUI terminal apparatuses and the new RUI terminal apparatus 200 according to an input user command. For example, when the resource scarcity event occurs and a user command to adjust allocation of resources is input, the controller 130 may adjust the allocation of the resources according to the input user command. When the user command is input before the resource scarcity event occurs, the resources may be allocated according to the priority as described above.

The above-described exemplary embodiment of the scarcity of the network bandwidth is considered again. That is, when the RUI server 100-1 provides the RUI service using a part of the bandwidth of the wireless network, and the RUI server 100-1 needs a bandwidth exceeding the available bandwidth of the wireless network to respond to the request of the new RUI terminal apparatus 200, that the RUI server 100-1 lacks resources. Further, the RUI server 100-1 may display the resource scarcity message or may transmit the message to the RUI terminal apparatuses 200 as described above. At the same time, the RUI server 100-1 may adjust allocation of resources.

In the above-described exemplary embodiment, the user may check the resource scarcity message and then may input a command concerning how to allocate the resources through an inputter of the RUI server 100-1. The RUI server 100-1 provides a user interface such as a button or a touch screen, and the user inputs a resource allocation command through the button or the touch screen. The network adjuster 133 adjusts the new RUI terminal apparatus 200 to receive the requested content and stops providing the service to another RUI terminal apparatus which has received the RUI service, according to the input resource allocation command. At this time, the RUI server 100-1 transmits a service end message to another RUI terminal apparatus and another RUI terminal apparatus displays the message and informs the user.

The user command to adjust allocation of resources may be received through the RUI terminal apparatus 200. The RUI terminal apparatus 200 may provide various user interfaces and the user command input and relevant priority may be set through the user interface. The authority to adjust allocation of resources may be recognized by some devices, and may be denied by some devices. That is, the user command to reallocate the resources may be received from the inputter of the RUI server 100-1 or the RUI terminal apparatus that has the authority from among the plurality of RUI terminal apparatuses and the new RUI terminal apparatus.

According to an exemplary embodiment, the controller 130 may include the transcoder 131. Alternatively, the transcoder 131 may be included in the RUI server 100-1 as an element separate from the controller 130. When the resource scarcity event occurs, the transcoder 131 performs transcoding such that the RUI server 100-1 can provide the RUI service to as many RUI terminal apparatuses as possible.

When the RUI server 100-1 lacks the service bandwidth due to a content streaming request of the new RUI terminal apparatus 200, the RUI server 100-1 may adjust a resolution of content that is transmitted to the plurality of RUI terminal apparatuses and/or content to be transmitted to the new RUI terminal apparatus, and may transmit the content. When the resolution of the content is reduced, information on more images can be transmitted during a reference time and thus a seamless streaming service can be provided using a narrow bandwidth. This method allows the RUI server 100-1 to provide the RUI service to as many RUI terminal apparatuses as possible, and thus overcomes the limitation of the above-described exemplary embodiments in which the service is stopped according to priority.

The above-described RUI service may be provided based on a web browser. That is, a web browser included in the RUI server 100-1 (or the controller) may provide an interface to provide the RUI service and may render the above-described resource scarcity message. In this case, the RUI service may be provided based on a markup language and each web browser includes a parser.

The controller 130 may include a hardware configuration such as a micro processing unit (MPU) or a central processing unit (CPU), a cache memory, and a data bus, and a software configuration such as an operating system, a framework, and an application to perform a specific purpose. A control command on each element for operating the RUI server 100 or 100-1 may be read out from a memory according to a system clock, and an electric signal may be generated according to the read-out control command which operates each element of the hardware. Beside these, the RUI server 100 may include another element that a general electronic calculating apparatus has.

The RUI server 100 or 100-1 may be a variety of devices that can exchange RUI services in the home network. For example, the RUI server 100 or 100-1 may be at least one of a set-top box, a digital television, a smartphone, a tablet PC, a laptop computer, a personal computer, a home appliance like a refrigerator, a smart watch, smart glasses, a home network server, and a digital multifunction peripheral.

Hereinafter, a configuration and an operation of the RUI terminal apparatus 200 will be explained.

FIG. 5 is a block diagram illustrating an RUI terminal apparatus according to an exemplary embodiment.

Referring to FIG. 5, an RUI terminal apparatus 200 according to an exemplary embodiment includes a communicator 210, a display 220, and a controller 230.

The communicator 210 is configured to communicate with the RUI server to receive the RUI service. In particular, the communicator 210 transmits an RUI service request to the RUI server 100 or 100-1 (hereinafter, reference numeral 100 is used) and receives the RUI service from the RUI server 100.

The communicator 210 may communicate with the RUI server 100 according to various wire/wireless communication standards along with a protocol conforming to CEA-2014 which is the RUI technology standard. Also, the communicator 210 may communicate with another RUI terminal apparatus.

For example, like in the RUI server 100 described above, the communicator 210 may communicate according to the 3^{rd} generation cellular communication standard such as Wi-Fi, wideband CDMA (WCDMA), high speed downlink packet access (HSDPA), high speed uplink packet access (HSUPA), and high speed packet access (HSPA), and mobile WiMAX, WiBro, and long term evolution (LTE) standards, which are the 4^{th} generation mobile communication technologies. Besides these, the communicator 210 may communicate according to other short-range communication standards such as Bluetooth, infrared data association (IrDA), near field communication (NFC), and Zigbee standards, and the wireless LAN standard. Also, the communicator 210 may communicate according to a wire interface standard such as high definition multimedia interface (HDMI), digital video/visual interface (DVI), mobile high-definition link (MHL), and digital interactive interface for video and audio (DIIVA).

The display 220 is configured to display a variety of information. For example the display 220 may render the RUI service received from the RUI server 100 or display a variety of information processed by the RUI terminal apparatus 200. In particular, when the RUI server 100 lacks resources due to a content request of the RUI terminal apparatus 200, the display 220 receives the resource scarcity message from the RUI server 100 and displays the received resource scarcity message. The displaying the resource scarcity message has been described above.

In general, the RUI terminal apparatus 200 may be implemented by using a display apparatus having a high performance display function, such as a smartphone, a tablet PC, and a digital TV. This is because the RUI terminal apparatus 200 aims at receiving and rendering the RUI service. However, because the client and the server are relative to each other in their roles, the RUI terminal apparatus 200 may provide the RUI service if necessary. Likewise, the RUI server 100 may receive the RUI service.

The display 220 may be implemented in various ways. For example, the display 220 may be implemented by using various display technologies such as an organic light emitting diode (OLED), a liquid crystal display panel (LCD panel), a plasma display panel (PDP), a vacuum fluorescent display (VFD), a field emission display (FED), and an electro luminescence display (ELD). Also, a flexible display or a transparent display may be applied to the display 220.

The controller 230 may control an overall operation of the RUI terminal apparatus 200. In particular, when the RUI server 100 lacks resources due to the RUI service request, the controller 230 may control to receive the resource scarcity message from the RUI server 100 and display the received resource scarcity message. The resource scarcity message may include at least one of resource allocation information on the plurality of RUI terminal apparatuses and resource information necessary for the RUI terminal apparatus 200.

The above-described RUI service may be provided based on a web browser. That is, a web browser included in the RUI terminal apparatus 200 (or the controller) may provide an interface to provide the RUI service and may render the above-described resource scarcity message. In this case, the RUI service request input by the user may be processed and transmitted to the communicator 210.

The above-described controller 230 may include a hardware configuration such as a micro processing unit (MPU) or a central processing unit (CPU), a cache memory, and a data bus, and a software configuration such as an operating system, a framework, and an application to perform a specific purpose. A control command on each element for operating the RUI terminal apparatus 200 may be read out from a memory according to a system clock, and an electric signal may be generated according to the read-out control command to operate each element of the hardware. Beside these, the RUI terminal apparatus 200 may include another element that a general electronic calculating apparatus has.

The RUI terminal apparatus 200 may be a variety of devices that can exchange RUI services in the home network. For example, the RUI terminal apparatus 200 may be at least one of a set-top box, a digital television, a smartphone, a tablet PC, a laptop computer, a personal computer, a home appliance like a refrigerator, a smart watch, smart glasses, a home network server, and a digital multifunction peripheral.

Hereinafter, a method for providing an RUI service according to various exemplary embodiments will be explained.

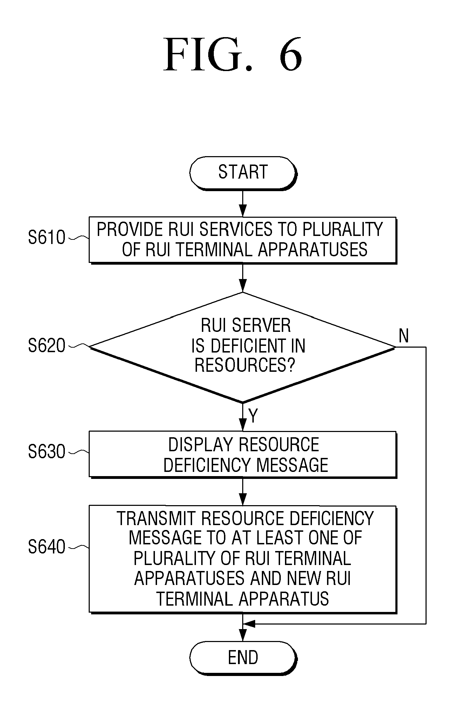

FIGS. 6 to 9 are flowcharts illustrating a method for providing an RUI service according to various exemplary embodiments.

Referring to FIG. 6, a method for providing an RUI service according to an exemplary embodiment may include: providing an RUI service to a plurality of RUI terminal apparatuses (S610); when resources are scarce due to an RUI service request of a new RUI terminal apparatus (S620-Y), displaying a resource scarcity message (S630); and transmitting the resource scarcity message to at least one RUI terminal apparatus from among the plurality of RUI terminal apparatuses and the new RUI terminal apparatus (S640).

The resource scarcity message may include at least one of resource allocation information on the plurality of RUI terminal apparatuses, and resource information necessary for the new RUI terminal apparatus.

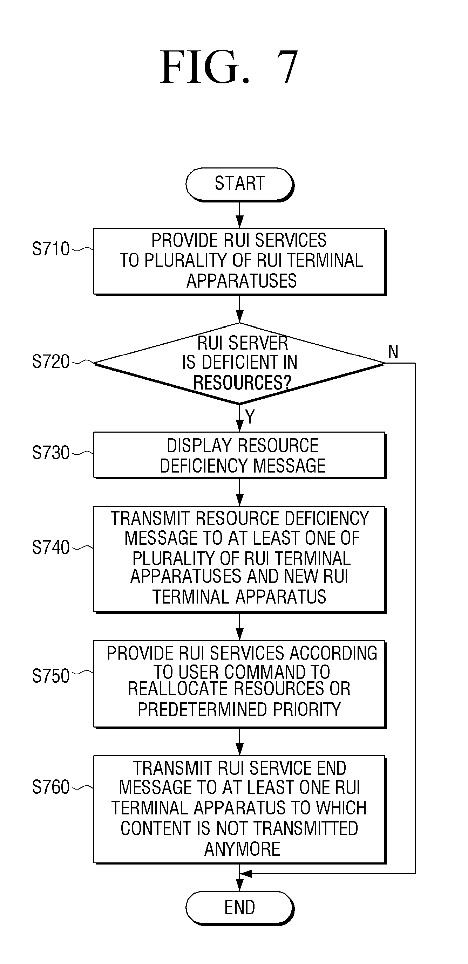

Referring to FIG. 7, a method for providing an RUI service according to another exemplary embodiment may include: providing an RUI service to a plurality of RUI terminal apparatuses (S710); when resources are scarce due to an RUI service request of a new RUI terminal apparatus (S720-Y), displaying a resource scarcity message (S730); and transmitting the resource scarcity message to at least one RUI terminal apparatus from among the plurality of RUI terminal apparatuses and the new RUI terminal apparatus (S740).

Also, the method for providing the RUI service described above may further include adjusting the provision of the RUI service to the plurality of RUI terminal apparatuses and the new RUI terminal apparatus according to a user command to reallocate the resources or predetermined priority (S750).

Also, the method for providing the RUI service may further include stopping the providing of the RUI service to at least one of the plurality of RUI terminal apparatuses and the new RUI terminal apparatus according to a result of the adjusting the provision of the RUI service, and transmitting an RUI service end message to at least one RUI terminal apparatus for which the provision of the RUI service is stopped (S760).

The user command to reallocate the resources may be received from the inputter of the RUI server, or at least one RUI terminal apparatus that has authority from among the plurality of RUI terminal apparatuses, and the new RUI terminal apparatus.

The adjusting the provision of the RUI service (S750) may be adjusted when the service bandwidth is scarce due to a content request of the new RUI terminal apparatus. The adjusting may include adjusting a resolution of content that is transmitted to the plurality of RUI terminal apparatuses and/or content to be transmitted to the new RUI terminal apparatus, and transmitting the content.

The adjusting the provision of the RUI service (S750) may be when all tuners of a broadcast receiving apparatus are in use and the new RUI terminal apparatus requests broadcast streaming of a new channel that is not tuned. The adjusting may include adjusting a tuning channel of the broadcast receiving apparatus according to a user command to reallocate the resource or predetermined priority.

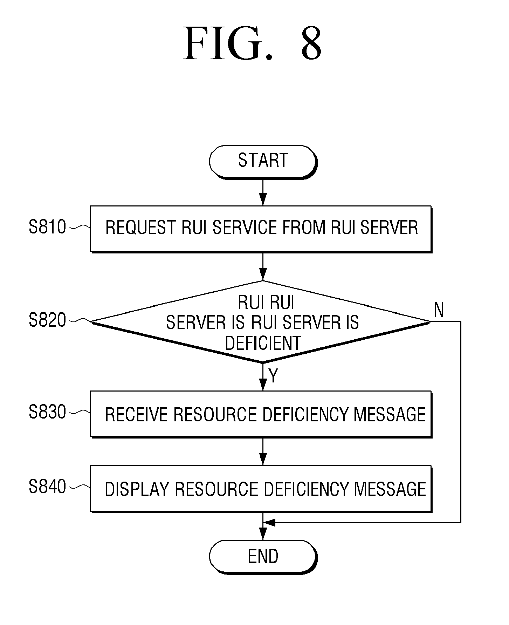

Referring to FIG. 8, a method for providing an RUI service according to still another exemplary embodiment may include: requesting an RUI service from an RUI server (S810); when the RUI server lacks resources due to the RUI service request (S820-Y), receiving a resource scarcity message from the RUI server (S830); and displaying the received resource scarcity message (S840).

The resource scarcity message may include at least one of resource allocation information on the plurality of RUI terminal apparatuses and resource information necessary for the new RUI terminal apparatus.

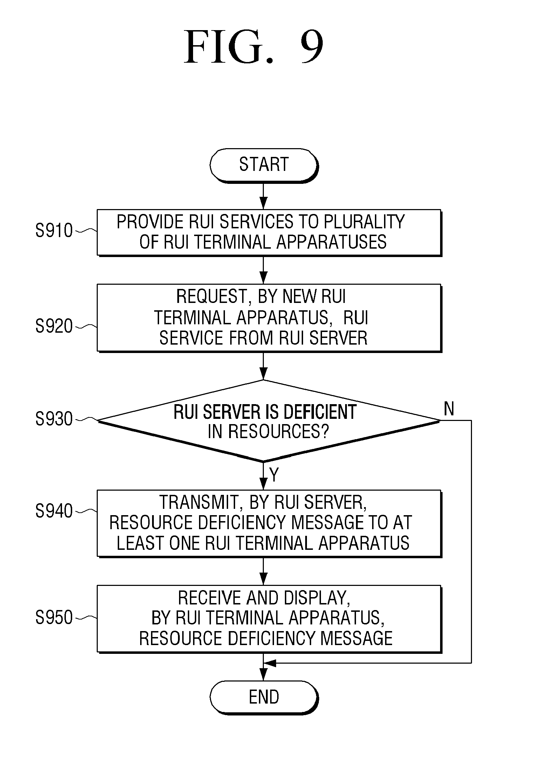

Referring to FIG. 9, a method for providing an RUI service according to still another exemplary embodiment may include: providing, by an RUI server, the RUI service to a plurality of RUI terminal apparatuses (S910), and requesting, by a new RUI terminal apparatus, the RUI server to provide the RUI service (S920). Also, when the RUI server lacks resources due to the RUI service request (S930-Y), the RUI server transmits a resource scarcity message to at least one of the plurality of RUI terminal apparatuses and the new RUI terminal apparatus (S940), and the RUI terminal apparatus which has received the resource scarcity message displays the resource scarcity message (S950).

The above-described method for providing the RUI service may be stored in a non-transitory computer readable medium in the form of a program. The non-transitory computer readable medium refers to a medium that stores data semi-permanently rather than storing data for a very short time, such as a register, a cache, and a memory, and is readable by an electronic apparatus. For example, the non-transitory computer readable medium includes a compact disc (CD), a digital versatile disk (DVD), a hard disk, a Blu-ray disk, a universal serial bus (USB), a memory card, and a read only memory (ROM).

The above-described method for providing the RUI service may be embedded in a hardware IC chip in the form of embedded software and may be included as a part of the RUI server 100 or the RUI terminal apparatus 200.

According to the various exemplary embodiments as described above, when the RUI client competes with one another for the resources, the resources can be allocated effectively and information on a waiting situation for use of the resources or information on priority may be notified to the user of each RUI client.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for providing a remote user interface (RUI) service, the method comprising:
providing an RUI service to a plurality of RUI terminal apparatuses; and
when resources are scarce due to an RUI service request of a new RUI terminal apparatus, displaying a resource scarcity message and transmitting the resource scarcity message to at least one RUI terminal apparatus from among the plurality of RUI terminal apparatuses and the new RUI terminal apparatus.

2. The method as claimed in claim 1, wherein the resource scarcity message comprises at least one of resource allocation information for the plurality of RUI terminal apparatuses and resource allocation information for the new RUI terminal apparatus.

3. The method as claimed in claim 1 to 2, further comprising:
adjusting the RUI service being provided to the plurality of RUI terminal apparatuses and the new RUI terminal apparatus in response to a user command to reallocate the resources or a predetermined priority.

4. The method as claimed in claim 3, wherein the user command to reallocate the resources is received from an inputter of the RUI server, or at least one RUI terminal apparatus that has authority from among the plurality of RUI terminal apparatuses and the new RUI terminal apparatus.

5. The method as claimed in claim 3, wherein the adjusting the providing the RUI service comprises, when a service bandwidth is scarce due to a content request of the new RUI terminal apparatus, adjusting a resolution of at least one of a content that is transmitted to the plurality of RUI terminal apparatuses and a content to be transmitted to the new RUI terminal apparatus, and transmitting the content.

6. The method as claimed in claim 3, wherein the adjusting the providing the RUI service comprises, when all tuners of a broadcast receiving apparatus are in use and the new RUI terminal apparatus requests broadcast streaming of a new channel which is not tuned, adjusting a tuning channel of the broadcast receiving apparatus according to the user command to reallocate the resources or the predetermined priority.

7. The method as claimed in claim 3, further comprising:
stopping the RUI service being provided to at least one of the plurality of RUI terminal apparatus and the new RUI terminal apparatus according to a result of the adjusting the providing the RUI service; and
transmitting an RUI service end message to the at least one RUI terminal apparatus for which the provision of the RUI service is stopped.

8. A remote user interface (RUI) server comprising:
a display;
a communicator configured to communicate with a plurality of RUI terminal apparatuses to provide an RUI service; and
when resources are scarce due to an RUI service request of a new RUI terminal apparatus, a controller configured to control to the display to display a resource scarcity message and control the communicator to transmit the resource scarcity message to at least one RUI terminal apparatus from among the plurality of RUI terminal apparatuses and the new RUI terminal apparatus.

9. The RUI server as claimed in claim 8, wherein the resource scarcity message comprises at least one of resource allocation information on the plurality of RUI terminal apparatuses and resource information necessary for the new RUI terminal apparatus.

10. The RUI server as claimed in claim 8 to 9, wherein the controller adjusts the RUI service being provided to the plurality of RUI terminal apparatuses and the new RUI terminal apparatus according to a user command to reallocate the resources or predetermined priority.

11. The RUI server as claimed in claim 10, wherein the user command to reallocate the resources is received from an inputter of the RUI server, or at least one RUI terminal apparatus that has authority from among the plurality of RUI terminal apparatuses and the new RUI terminal apparatus.

12. The RUI server as claimed in claim 10, wherein, when a service bandwidth is scarce due to a content streaming request of the new RUI terminal apparatus, the controller adjusts a resolution of at least one of a content that is transmitted to the plurality of RUI terminal apparatuses and a content to be transmitted to the new RUI terminal apparatus, and transmits the content.

13. The RUI server as claimed in claim 10, wherein, when all tuners of a broadcast receiving apparatus are in use and the new RUI terminal apparatus requests broadcast streaming of a new channel which is not tuned, the controller adjusts a tuning channel of the broadcast receiving apparatus according to the user command to reallocate the resources or the predetermined priority.

14. The RUI server as claimed in claim 10, wherein the controller controls the communicator to stopproviding the RUI service to at least one of the plurality of RUI terminal apparatus and the new RUI terminal apparatus according to a result of the adjusting the providing the RUI service, and controls the communicator to transmit an RUI service end message to the at least one RUI terminal apparatus for which the provision of the RUI service is stopped.
